Europäisches Patentamt

(19) European Patent Office

Office européen des brevets

(11) Publication number: **0 028 867**
A2

(12) **EUROPEAN PATENT APPLICATION**

(21) Application number: **80201062.9**

(22) Date of filing: **08.11.80**

(51) Int. Cl.³: **C 04 B 31/30**
**C 04 B 39/00, B 32 B 13/02**
**B 28 B 23/02**

(30) Priority: **12.11.79 GB 7939092**

(43) Date of publication of application:
**20.05.81 Bulletin 81/20**

(84) Designated Contracting States:
**BE DE FR NL SE**

(71) Applicant: **UNIVERSITY OF SURREY**
**Guildford**
**Surrey GU2 5XH(GB)**

(72) Inventor: **Hibbert, Ashley**
**21 Cooper Road**
**Guildford Surrey(GB)**

(74) Representative: **Philippens, Martin Hubert Johan**
**Jacques**
**OCTROOIBUREAU DSM Postbus 9**
**NL-6160 MA Geleen(NL)**

(54) Composites of water-hardening substance and organic film networks and method of producing these composites.

(57) A method for producing a composite of a water hardening substance and a fibrillated organic film network having its
primary strength in one direction. A plurality of layers of
expanded fibrillated organic film network are incorporated in
a water hardening substance such that the primary strength
directions of the layers are aligned to form at least one mass of
green material. The or each mass is then formed into a struc-
ture in which the primary strength direction of the layers of
expanded organic network extend in at least two directions.

This structure may be a laminar structure formed by
superimposing sheets of green material, or a helically folded
structure.

FIG.1.

EP 0 028 867 A2

- 1 -                                    3236
                                    0028867

## COMPOSITES OF WATER HARDENING SUBSTANCE

## AND ORGANIC FILM NETWORKS

This invention relates to composites of a water-hardening substance and a network of a fibrillated organic film.

The development of a new composite including a water-hardening substance, such as cement, and a fibrillated organic film has already been proposed in Dutch patent application 7707253 in the names of the University of Surrey and D.J. Hannant. In more detail, the specification of this Patent Application describes inter alia the incorporation of fibrillated film expanded to form an open network, and this network is incorporated in an article in the form of a plurality of layers. While it may be possible to give good two-dimensional strength with special opened out fibrillated networks, the manufacture of special networks having two dimensional strength is liable to be rather more costly than relatively crude networks achieved simply by fibrillating by conventional methods and applying a lateral force to the fibrillated film to produce the network.

While articles of a composite with essentially single-dimensional strength can render performance satisfactory under some circumstances, it is clearly desirable to give two- dimensional strength to the composite without materially increasing the production costs.

According to the present invention there is provided a method for producing a composite of a water-hardening substance and a fibrillated organic film network having its primary strength in one direction, the method comprising the steps of incorporating a plurality of layers of expanded fibrillated organic film network in a water-hardening substance such that the primary strength directions of the said layers are aligned to form at least one mass of green material, and forming the or each mass of green material into a structure in which primary strength directions of layers of expanded fibrillated organic network extend in at least two directions.

Further according to the present invention there is provided a method for producing a composite of a water-hardening substance and fibrillated organic film network having its primary strength in one direction, the method comprising forming two or more sheets of green material by incorporating a plurality of layers of expanded fibrillated organic film network into a mass of water-hardening substance, applying two sheets to one another such that the primary strength direction of the layers in one sheet extend perpendicularly to the primary strength direction of layers in the other sheet, and curing the green material to form a bonded laminar composite.

Still further according to the present invention there is provided a method for producing a composite of a water-hardening substance and a fibrillated organic film network having its primary strength in one direction, the method comprising forming a sheet of green material by incorporating a plurality of layers of expanded fibrillated organic film network into the mass of water-hardening substance, twisting the sheet of green material into the shape of a helix, applying lateral pressure on the helix so that portions of the sheet on one side of the helix contacts opposed portions of the sheet on the other side of the helix, and curing the green material.

Yet further according to the present invention there is provided a composite when manufactured in accordance with any one of the preceding three paragraphs.

These and other novel features of the invention will now be described, by way of example, with reference to the accompanying diagrammatic drawings, in which:

Figure 1 is a perspective view illustrating one method of forming a composite in accordance with the invention;

Figure 2 is a plan view illustrating a second method of forming a composite in accordance with the present invention; and

Figure 3 is a graph showing tensile and stress-strain curves for composites of the form shown in Figure 1.

- 4 -

The invention is based on the fact that even very thin layers of composite material made from a water-hardening substance such as cement/sand and cement/PFA can be handled successfully without disintegration even in the green state. This is made possible because of the integral nature of the reinforcement as proposed in Dutch patent application 7707253.

In this prior Application opened out or, in other words, expanded, fibrillated organic film networks, such as polypropylene are described and a large number of layers of such film network is incorporated in a water-hardening substance, in order to produce a composite. The tests already carried out at the time of the earlier Application and described therein primarily related to sheet materials, but it must be emphasised that both the composite of the prior Application and composites in accordance with the present invention are applicable to any form or shape of article appropriate for the use of cement, cement mixtures, gypsum or any other water-hardening substance. Thus, although the following preferred methods are described in relation to sheet, the invention should not be considered in any way to be limited to this form.

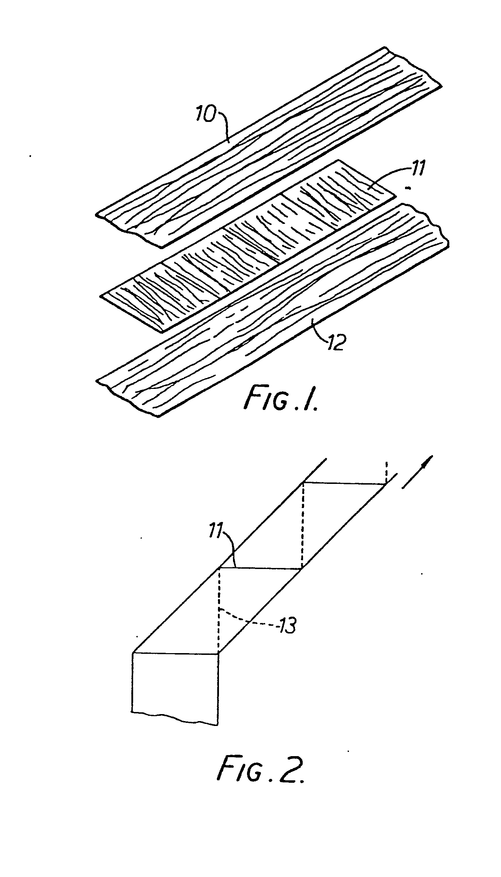

Figure 1 illustrates as an exploded perspective view, prior to assembly of a composite in which the uppermost and lowermost components 10, 12 have their reinforcing networks extending primarily longitudinally of the individual components, whilst the intermediate components 14 each have a length corresponding to the width of components 10, 12, and have their network extending transversely to the longitudinal direction of the uppermost and lowermost components. In practice, the method will involve applying the individual components together substantially immediately after initial lay-up and the three components will become bonded together during setting to form the final composite without any additional adhesive or other material.

Each component may have a thickness from 1 to 3 mm. or more if a very strong composite is required and the number of layers of fibrillated film will depend upon the final properties required for the composite.

The "green" nature of the components will be such that in both methods proposed herein, it will be possible to handle them without risk of damage, but not so near setting that bond between the components is impaired. Once set, the composite components will be indistinguishable and no laminar effect will be apparent in the matrix of water-hardening substance.

It will, of course, be possible to laminate together a larger number of alternate components with the reinforcement extending in alternate components at right angles to one another. As illustrated in Figure 1, the final material will have a strength ratio of approximately 2 to 1 in the length direction of the uppermost and lowermost components. To achieve at least approximately equal strength in two orthogonal directions, the uppermost and lowermost components 10, 12 will have approximately half as many reinforcing layers. It is, of course, possible to laminate merely two components together to give equal strength in both directions and; where

-*/*-

thicker composites are concerned, five individual components or more may be employed.

The method illustrated by Figure 2 is believed to give also satisfying products. In particular, a producing machine may deliver the green sheet component substantially in the form of a helix. This helix is flattened by the application of lateral pressure so that portions of the sheet on one side of the helix contact portions of the sheet on the other side of the helix in the pattern as indicated to produce a final composite sheet in which at any given location in the sheet, the direction of the reinforcement is always at $45^{\circ}$ to the length direction of the sheet with the upper component in one direction and the lower component at $90^{\circ}$ to the upper one.

The lines 11 effectively represent two longitudinal edge portions of the green component which in the folded condition are touching one another and the broken lines 13 effectively represent two similar edge portions at the opposite face of the final composite.

Although shown at right angles the strength direction in adjacent components may be at angles less than $90^{\circ}$ and for example with a three component laminate, the strength directions may lie at $120^{\circ}$ to another.

0028867

- 8 -

If the process described in relation to Figure 2 is repeated, the resulting sheet will consist of four components with the main directions of reinforcement at $0^o$ and $90^o$ to the length direction of the composite.

For special purposes where the strength direction need not be equal in two orthogonal directions, the reinforcement may be arranged in adjacent components in appropriate directions.

EXAMPLE

A first, a second and a third sheet, each 7 mm thick and 400 mm square, were made by the process illustrated by Figure 1. Thus the ratios of the number of reinforcing networks having their primary strength directions in one direction to the number of reinforcing elements whose primary strength direction was orthogonal to the one direction was 2:1.

The water-hardenable mass employed had the following composition by weight:

| | |
|---|---|
| Cement | 1.00 |
| Total water | 0.34 |
| Pulverised fly ash | 0.25 |
| Fine sand, passing 150 - 300 micron sieve | 0.19 |
| A sulphonated melamine formaldehyde resin (dispersing agent) | 0.02 |

The second and third sheets were cut into strips so that the greater proportions of the reinforcing networks were arranged with their primary strength direction extending along the length of the strips. The fibre volume along the length of the strips from the second and third sheets was 4.9% and 8.4% respectively and the fibre volume in the orthogonal direction was 2.0% in strips from the second sheet and 4.9% in strips from the third sheet. The first sheet was cut into strips wherein the greater proportion of the reinforcing networks were arranged with their primary strength direction extending perpendicularly to the strip length. The fibre volume along the length of the strips from the first sheet was 2.7% and the fibre volume in the orthogonal direction was 4.3%.

The strips were then tested at a constant rate of displacement in uniaxial tension to failure.

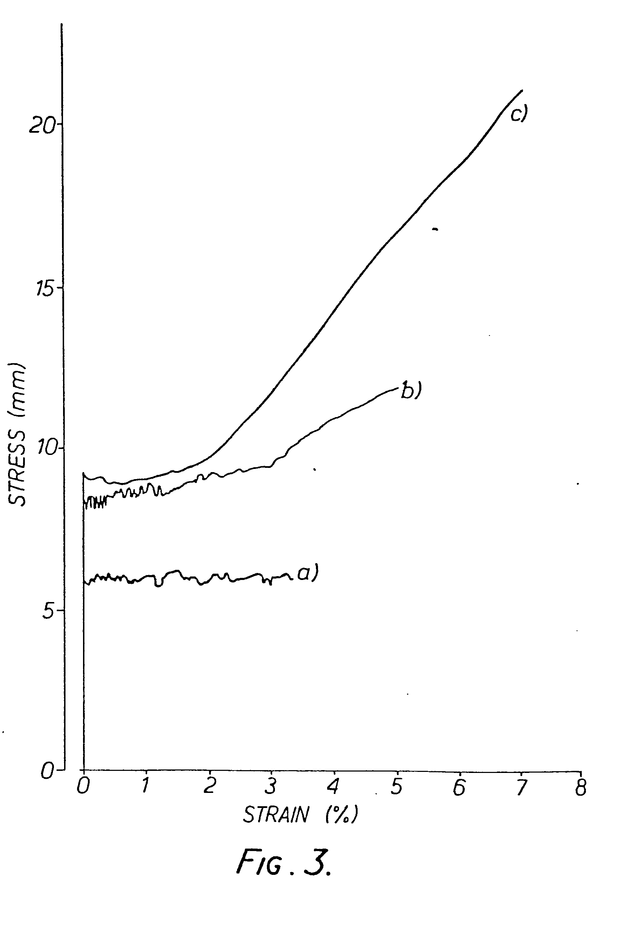

Representative results are illustrated in Figure 3, curves a, b and c representing the results obtained from strips from the first, second and third sheets respectively. The final crack spacings in the strips from the first, second and third sheets were 3.5 mm; 2.5 mm and 1 mm respectively.

No delamination of the composites occurred after curing from the green state or during loading.

The results obtained show that the composites have good stress-strain characteristics even with a fibre volume of as little as 7% distributed in two orthogonal directions in the ratio 2:1.

## CLAIMS

1.      A method for producing a composite of a water-hardening substance and a fibrillated organic film network having its primary strength in one direction, the method comprising the steps of incorporating a plurality of layers of expanded fibrillated organic film network in a water-hardening substance such that the primary strength directions of the said layers are aligned to form at least one mass of green material, and forming the or each mass of green material into a structure in which primary strength directions of layers of expanded fibrillated organic network extend in at least two directions.

2.      A method according to claim 1, wherein the primary strength directions of the layers of expanded fibrillated organic network extend in two mutually perpendicular directions in the structure.

3.      A method according to claim 1 or claim 2, wherein the said structure is formed by superimposing two or more said masses of green material to form a laminar structure.

4.      A method according to claim 3, wherein the primary strength direction of layers of expanded fibrillated organic network in one lamina extend perpendicularly to the primary strength direction of layers of expanded fibrillated organic network in     each adjacent lamina.

5.      A method according to claim 1, wherein the said structure is formed by folding one mass of green material.

6.      A method according to claim 5, wherein the mass of green material is in the form of a sheet, the sheet being folded into a helical arrangement and compressed laterally.

7.      A method for producing a composite of a water-hardening substance and fibrillated organic film network having its primary strength in one direction, the method comprising forming two or more sheets of green material by incorporating a plurality of layers of expanded fibrillated organic film network into a mass of water-hardening substance, applying two sheets to one another such that the primary strength direction of the layers in one sheet extend perpendicularly to the primary strength directions of layers in the other sheet, and curing the green material to form a bonded laminar composite.

8.      A method according to claim 7, wherein each sheet has a thickness of from 1.0 to 3.00 mm.

9.      A method for producing a composite of a water-hardening substance and a fibrillated organic film network having its primary strength in one direction, the method comprising forming a sheet of green material by incorporating a plurality of layers of expanded fibrillated organic film network into the mass of water-hardening substance, twisting the sheet of green material into the shape of a helix, applying lateral pressure on the helix so that portions of the sheet on one side of the helix contacts opposed portions of the sheet on the other side of the helix, and curing the green material.

10.     A method for producing a composite of a water-hardening material and a fibrillated organic film network substantially as hereinbefore described with reference to Figure 1 or Figure 2 of the accompanying drawings.

11.     A composite of a water-hardening substance and a fibrillated organic film network whenever produced by a method according to any one of the preceding claims.

0028867

FIG.1.

FIG.2.

0028867

FIG. 3.